# EUROPEAN PATENT APPLICATION

(11) **EP 4 068 469 A1**
(43) Date of publication of application: **05.10.2022**
(21) Application number: 22165398.3
(22) Date of filing: 30.03.2022
(51) Int. Cl.: H01M 10/613, H01M 10/625, H01M 10/647, H01M 10/653, H01M 10/6551, H01M 10/6555, H01M 50/209, H01M 50/211, H01M 50/242, H01M 50/291, H01M 50/293, H01M 50/204

(54) **POWER STORAGE DEVICE**

(30) Priority: 31.03.2021 JP 2021060113
(71) Applicant: TOYOTA JIDOSHA KABUSHIKI KAISHA, Toyota-shi, Aichi-ken, 471-8571 (JP)
(72) Inventor: NAKAYAMA, Hiroyuki, Toyota-shi, 471-8571 (JP); KATO, Masashi, Toyota-shi, 471-8571 (JP)
(74) Representative: D Young & Co LLP

(57) **Abstract**

A power storage device (10) includes: a power storage module including a plurality of power storage cells; and a restriction unit disposed between the power storage cells. The restriction unit includes: a first flat plate (532) and a second flat plate (534); and a corrugated plate (520) disposed between the first flat plate (532) and the second flat plate (534). The corrugated plate (520) has a plurality of first curved portions (532) and a plurality of second curved portions (534). Each of the first curved portions (532) has a shape curved to protrude toward one side in the stacking direction (H). Each of the second curved portions (534) has a shape curved to protrude toward the other side in the stacking direction (H). The first curved portions (532) and the second curved portions (534) are alternately arranged in a direction intersecting with the stacking direction (H) and the intersecting direction.

## Description

This nonprovisional application is based on Japanese Patent Application No. 2021-060113 filed on March 31, 2021 with the Japan Patent Office, the entire contents of which are hereby incorporated by reference.

### BACKGROUND

### Field

The present disclosure relates to a power storage device.

### Description of the Background Art

Conventionally, a battery cell in which an electrode assembly is accommodated in a laminate film has been known. For example, a battery cell disclosed in Japanese Patent Laying-Open No. 2019-139844 includes an electrode assembly, a laminate case accommodating the electrode assembly, and a terminal.

The electrode assembly includes a plurality of electrode sheets and a separator. Each electrode sheet includes a current collecting foil and an electrode active material layer formed on the current collecting foil. The current collecting foil is provided with an extending portion in which no electrode active material is formed. The extending portion is connected to the terminal inside the laminate case. The terminal is formed to protrude outward from the laminate case.

### SUMMARY

A power storage device includes a power storage module in which power storage cells are stacked, and an accommodation case that accommodates the power storage module.

In this case, upon charging and discharging of the power storage device, the power storage module deforms so as to expand in the stacking direction. As a result, a load is applied from the power storage module to the accommodation case, so that the accommodation case may deform.

Further, when the power storage device is mounted on a vehicle and the like, the power storage device may undergo vibrations, for example, due to traveling of the vehicle. When the power storage device vibrates, the power storage module in the accommodation case may vibrate to thereby cause resonance of the power storage module.

On the other hand, upon charging and discharging of the power storage device, the temperature inside the power storage module becomes high. In particular, among a plurality of stacked power storage cells, each power storage cell disposed at a position away from the accommodation case has low heat dissipation performance. As a result, among the power storage cells, each power storage cell located away from the accommodation case tends to rise in temperature.

The present disclosure has been made in view of the above-described problems, and an object of the present disclosure is to provide a power storage device that is capable of reducing a load applied from a power storage module to an accommodation case during charging and discharging to thereby suppress vibration of the power storage device, and in which the heat dissipation performance of the power storage module is improved.

A power storage device includes: a power storage module including a plurality of power storage cells stacked in a stacking direction; an accommodation case that accommodates the power storage module; and a restriction unit disposed between the power storage cells. The restriction unit includes: a first flat plate and a second flat plate spaced apart from each other in the stacking direction, and a corrugated plate disposed between the first flat plate and the second flat plate. The corrugated plate has a plurality of first curved portions and a plurality of second curved portions. Each of the first curved portions has a shape curved to protrude toward one side in the stacking direction and extending in an intersecting direction intersecting with the stacking direction. Each of the second curved portions has a shape curved to protrude toward the other side in the stacking direction and extending in the intersecting direction. The first curved portions and the second curved portions are alternately arranged in a direction intersecting with the stacking direction and the intersecting direction.

Each of the power storage cells includes an electrode assembly and a current collector plate connected to the electrode assembly. The power storage device further includes a filling portion provided inside the accommodation case so as to extend from an inner wall of the accommodation case to reach the current collector plate. The restriction unit is formed to reach the filling portion. The first flat plate and the corrugated plate are in contact with each other at a top of each of the first curved portions. The second flat plate and the corrugated plate are in contact with each other at a top of each of the second curved portions.

The restriction unit includes: an accommodation body that accommodates the first flat plate, the second flat plate, and the corrugated plate; and a dilatancy material accommodated in the accommodation body.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically showing a configuration of a battery pack including a power storage device according to a first embodiment of the present disclosure.
Fig. 2 is a cross-sectional view taken along a line II-II in Fig. 1.
Fig. 3 is an exploded perspective view schematically showing a configuration of a power storage module.
Fig. 4 is an exploded perspective view showing a restriction unit 500.
Fig. 5 is a cross-sectional view showing a restriction unit 500A according to a first modification of restriction unit 500.
Fig. 6 is a cross-sectional view showing a restriction unit 500B according to a second modification of restriction unit 500.
Fig. 7 is a cross-sectional view showing a restriction unit 500C according to a third modification of restriction unit 500.

### DESCRIPTION OF THE PREFERRED EMBODIMENTS

Embodiments of the present disclosure will be hereinafter described with reference to the accompanying drawings. In the accompanying drawings referred to below, the same or corresponding members are denoted by the same reference characters.

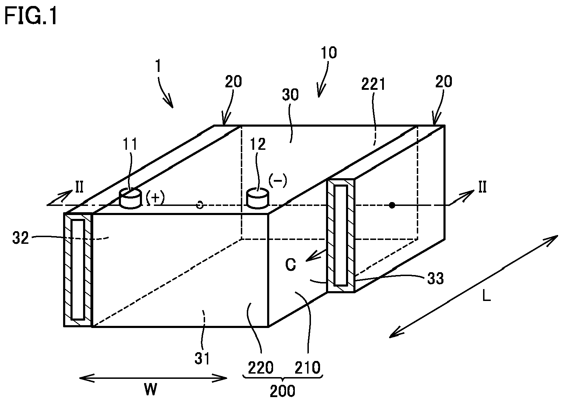

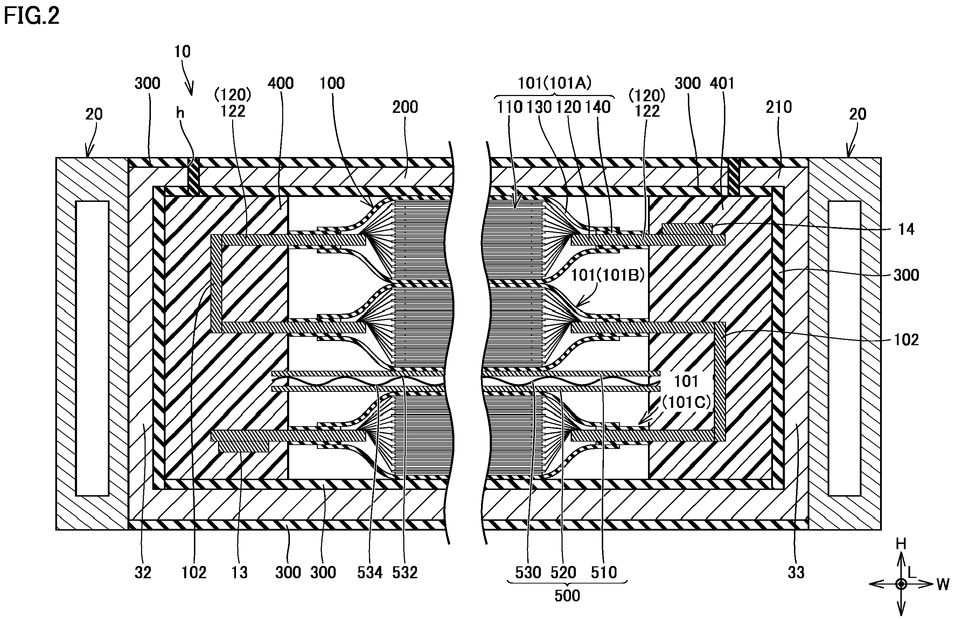

Fig. 1 is a perspective view schematically showing a configuration of a battery pack including a power storage device according to an embodiment of the present disclosure. Fig. 2 is a cross-sectional view taken along a line II-II in Fig. 1. A battery pack 1 is mounted, for example, on an electrically powered vehicle such as an electric vehicle.

As shown in Figs. 1 and 2, battery pack 1 includes a power storage device 10 and a cooling device 20. Cooling device 20 serves to cool power storage device 10. Cooling device 20 is disposed in contact with a side portion of power storage device 10. As shown in Fig. 1, cooling device 20 is configured such that a cooling medium (water or the like) C flows therethrough. Fig. 1 shows a partially cutaway state of cooling device 20.

As shown in Fig. 1, power storage device 10 includes a pair of external terminals 11 and 12. One external terminal 11 is a positive electrode terminal and the other external terminal 12 is a negative electrode terminal. As shown in Fig. 2, power storage device 10 includes a power storage module 100, a case 200, an insulating sheet 300, filling portions 400 and 401, and a restriction unit 500.

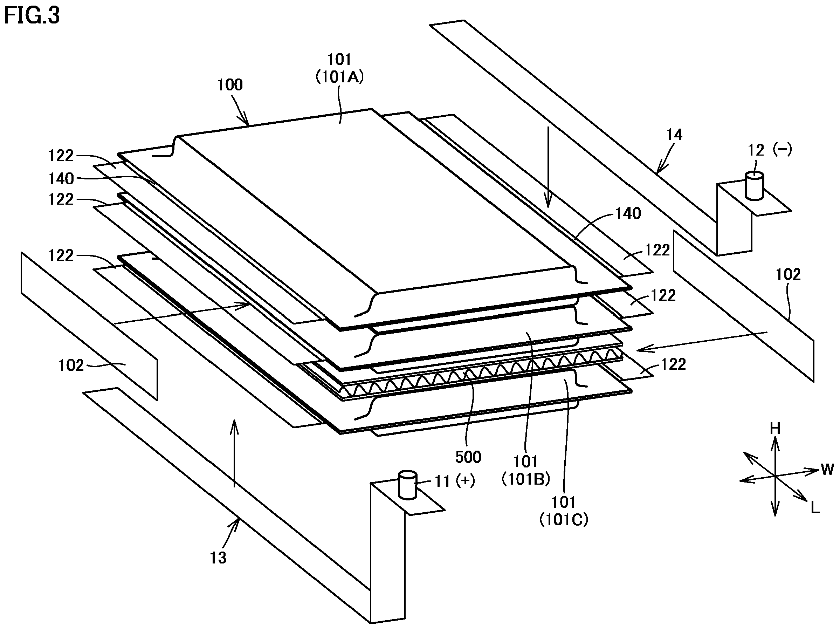

Fig. 3 is an exploded perspective view schematically showing the configuration of the power storage module. As shown in Figs. 2 and 3, power storage module 100 includes at least one power storage cell 101. In the present embodiment, power storage module 100 includes a plurality of power storage cells 101A, 101B, and 101C. Power storage cells 101A, 101B, and 101C are stacked in a stacking direction H (in one direction). Note that power storage cell 101B is located in the central area of power storage module 100 in stacking direction H. Figs. 2 and 3 each show three power storage cells 101, but the number of power storage cells 101 is not particularly limited. Examples of power storage cell 101 may be a lithium ion battery.

Power storage cell 101 is what is called a laminate-type cell. As shown in Fig. 2, each power storage cell 101 includes a plurality of electrode assemblies 110, a pair of current collector plates 120, a laminate film 130, an adhesive member 140, and an electrolytic solution (not shown).

Each of electrode assemblies 110 includes a plurality of positive electrode sheets, a plurality of separators, and a plurality of negative electrode sheets that are stacked in stacking direction H. A separator is disposed between the positive electrode sheet and the negative electrode sheet.

Each positive electrode sheet includes an aluminum foil and a positive electrode composite layer formed on each of the front and rear surfaces of the aluminum foil. The aluminum foil has an uncoated portion on which no positive electrode composite layer is formed.

Each negative electrode sheet includes a copper foil and a negative electrode composite layer formed on each of the front and rear surfaces of the copper foil. The copper foil has an uncoated portion on which no negative electrode composite layer is formed.

One current collector plate 120 is disposed adjacent to electrode assembly 110 in a width direction W. The other current collector plate 120 is disposed on the side opposite to one current collector plate 120 with respect to electrode assembly 110. The uncoated portion of each positive electrode sheet is connected to one current collector plate 120 while the uncoated portion of each negative electrode sheet is connected to the other current collector plate 120.

Laminate film 130 covers the plurality of electrode assemblies 110 and a part of current collector plate 120. Laminate film 130 is filled with an electrolytic solution (not shown).

As shown in Figs. 2 and 3, the outer peripheral edge portion of laminate film 130 is formed in a rectangular shape. Laminate film 130 is longer in a longitudinal direction L and shorter in width direction W. Longitudinal direction L and width direction W intersect with (are orthogonal to) stacking direction H. Longitudinal direction L and width direction W intersect with (are orthogonal to) each other. Note that longitudinal direction L and width direction W extend in the horizontal direction. Current collector plate 120 has a protrusion 122 protruding from laminate film 130. Each protrusion 122 protrudes outward from the long side of laminate film 130. Protrusions 122 are connected by a bus bar 15 such that power storage cells 101 are electrically connected in series.

As shown in Fig. 3, a bus bar 13 having external terminal 11 is connected to protrusion 122 of power storage cell 101C disposed at one end in stacking direction H. A bus bar 14 having external terminal 12 is connected to protrusion 122 of power storage cell 101A disposed at the other end in stacking direction H.

Adhesive member 140 serves to allow laminate film 130 to adhere to current collector plate 120. Adhesive member 140 is made of an insulating material (resins or the like). Adhesive member 140 is shaped to protrude from laminate film 130. In other words, adhesive member 140 covers a part of protrusion 122.

Case 200 accommodates power storage module 100. Case 200 is made of metal (aluminum or the like). As shown in Fig. 1, case 200 includes a case body 210 and closing plates 220 and 221.

Case body 210 opens at least in longitudinal direction L. In the present embodiment, case body 210 is formed in a rectangular tubular shape having a central axis extending in a direction orthogonal to stacking direction H of each power storage cell 101. Case body 210 is provided with an inlet port h (see Fig. 2). Case body 210 includes a top plate 30, a bottom plate 31, and side walls 32 and 33. Side walls 32 and 33 are spaced apart from each other in width direction W.

Closing plates 220 and 221 are welded to case body 210 so as to close the opening of case body 210. Closing plates 220 and 221 each are formed in a flat plate shape.

Cooling device 20 is provided on each side of case body 210 to be in contact with each of side walls 32 and 33 of case body 210. In other words, cooling device 20 is provided in contact with case 200 in the direction orthogonal to the stacking direction of power storage cells 101.

Insulating sheet 300 covers the inner surface of case body 210 and the inner surface of closing plate 220. As shown in Fig. 2, insulating sheet 300 may cover the upper surface and the lower surface of case body 210.

Filling portions 400 and 401 each are made of an insulating material. Filling portions 400 and 401 each are preferably made of a material having thermal conductivity and elasticity. Filling portions 400 and 401 each are formed by injecting the above-mentioned material (an insulating material in the present embodiment) into case 200 through inlet port h of case 200.

Filling portion 400 is formed to extend from side wall 32 to reach power storage module 100. Filling portion 401 is formed to extend from side wall 33 to reach power storage module 100. Filling portions 400 and 401 each cover the tip end of each protrusion 122. Filling portions 400 and 401 each cover the entire area of each protrusion 122 together with each adhesive member 140. Filling portions 400 and 401 each may cover the ends of each adhesive member 140 and each laminate film 130.

Filling portions 400 and 401 each preferably cover the entire areas of bus bars 102, 13, and 14. Filling portion 400 is preferably in contact with insulating sheet 300 provided on the inner surface of case body 210 and insulating sheet 300 provided on the inner surface of closing plate 220.

Restriction unit 500 is disposed inside case 200. Restriction unit 500 is disposed between power storage cells 101. In the example shown in Fig. 2, restriction unit 500 is disposed between power storage cells 101B and 101C. Restriction unit 500 may also be disposed between power storage cells 101A and 101B.

Restriction unit 500 restricts the relative displacement of power storage module 100 with respect to case 200 in stacking direction H of power storage cells 101. Restriction unit 500 exhibits a first elastic modulus when each power storage cell 101 is displaced relative to case 200 at a first speed, and exhibits a second elastic modulus greater than the first elastic modulus when each power storage cell 101 is to be displaced relative to case 200 at a second speed.

The first speed is a relative speed at which each power storage cell 101 of power storage module 100 is displaced relative to case 200 when each power storage cell 101 expands. The second speed is a relative speed at which each power storage cell 101 is displaced relative to case 200, and is higher than the first speed. The second speed is a relative speed at which each power storage cell 101 is displaced relative to case 200, for example, when power storage device 10 or battery pack 1 vibrates.

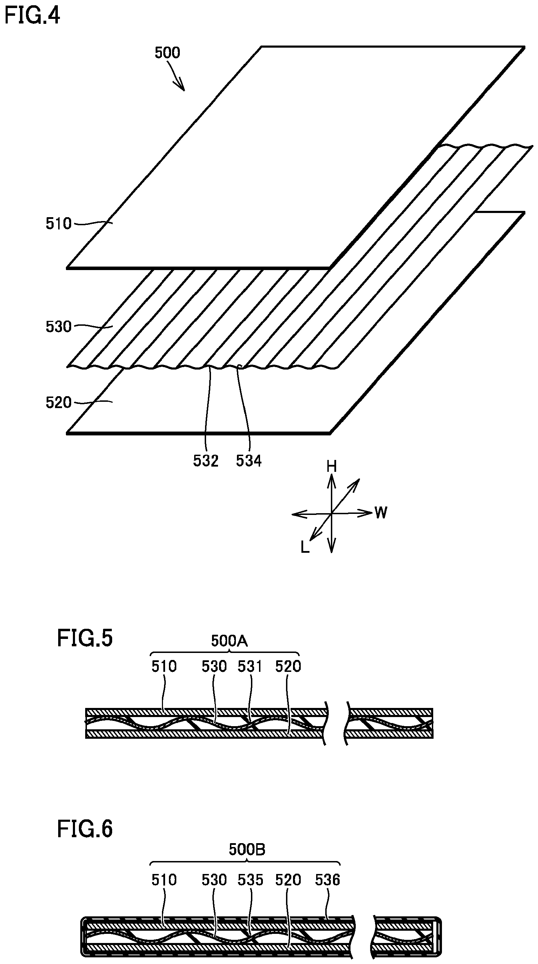

Fig. 4 is an exploded perspective view showing restriction unit 500. Restriction unit 500 includes a flat plate 510, a flat plate 520, and a corrugated plate 530.

Flat plates 510 and 520 are spaced apart from each other in stacking direction H, and corrugated plate 530 is disposed between flat plates 510 and 520. Flat plates 510, 520 and corrugated plate 530 each are formed to be longer in longitudinal direction L than in width direction W.

Corrugated plate 530 is provided with a curved portion 532 and a curved portion 534.

Curved portion 532 is formed to protrude toward one side (upward) in stacking direction H. Curved portion 532 is formed to extend in longitudinal direction L. Curved portion 534 is formed to protrude toward the other side (downward) in stacking direction H. Curved portion 534 is formed to extend in longitudinal direction L.

A plurality of curved portions 532 and a plurality of curved portions 534 are provided. Curved portions 532 and curved portions 534 are alternately arranged in width direction W.

In this case, in corrugated plate 530, the moment of inertia of area in a plane extending in stacking direction H and width direction W is defined as a moment of inertia of area I1. Then, a flat plate having the same thickness as that of corrugated plate 530 and not having curved portions 532 and 534 is defined as a comparative flat plate, and the moment of inertia of area of the comparative flat plate is defined as a moment of inertia of area 12.

Moment of inertia of area I1 is larger than moment of inertia of area 12. Thus, for example, during deformation caused by applying a load to one end in longitudinal direction L in the state where the other end in longitudinal direction L is fixed, corrugated plate 530 is less likely to deform than the comparative flat plate. Accordingly, restriction unit 500 exhibits high rigidity when it vibrates as described above.

Flat plate 510 is disposed on the upper surface of corrugated plate 530 and is in contact with curved portion 532. Flat plate 520 is disposed on the lower surface of corrugated plate 530 and is in contact with curved portion 534.

In this case, air exists in the gap between flat plate 510 and corrugated plate 530, and also, air exists in the gap between flat plate 520 and corrugated plate 530.

Flat plates 510, 520 and corrugated plate 530 each are made of a metal material. Flat plates 510, 520 and corrugated plate 530 each have a thermal conductivity of 10 W/mK or more.

Referring back to Fig. 2, flat plate 510 is disposed on the lower surface of power storage cell 101B, and flat plate 520 is disposed on the upper surface of power storage cell 101C.

Then, in width direction W, restriction unit 500 has one end penetrating into filling portion 400 and the other end penetrating into filling portion 401.

As a result of charging and discharging in power storage device 10 configured as described above, power storage module 100 deforms to expand in stacking direction H.

In this case, flat plates 510 and 520 are displaced to come close to each other in stacking direction H. Then, corrugated plate 530 deforms such that the expansion of curved portions 532 and 534 become smaller. As curved portions 532 and 534 deform, corrugated plate 530 deforms to extend in width direction W.

In this case, as corrugated plate 530 deforms, the points of contact between flat plate 510 and curved portion 532 and between flat plate 520 and curved portion 534 move while flat plates 510 and 520 are in contact with curved portions 532 and 534, respectively. Flat plates 510 and 520 each having a flat plate shape reduce the frictional resistance at these points of contact between flat plate 510 and curved portion 532 and between flat plate 520 and curved portion 534. Thereby, restriction unit 500 can favorably deform.

Filling portions 400 and 401 each are made of an elastically deformable material. Thus, as corrugated plate 530 deforms, filling portions 400 and 401 also deform.

In this way, even when power storage module 100 deforms to expand in stacking direction H due to charging and discharging, restriction unit 500 deforms to contract in stacking direction H. Since restriction unit 500 deforms to contract, the load applied from power storage module 100 to case 200 can be reduced, so that deformation of case 200 can be suppressed.

When battery pack 1 is mounted on a vehicle, power storage device 10 may undergo vibrations due to traveling of the vehicle.

For example, four corners of bottom plate 31 of power storage device 10 are fixed to a front panel or the like. Case 200 is formed to be longer in longitudinal direction L. Thus, when power storage device 10 vibrates, power storage device 10 is more likely to vibrate in the state where both ends in longitudinal direction L act as fixed ends and a central portion in longitudinal direction L acts as an antinode.

At this time, due to large moment of inertia of area I1, corrugated plate 530 and restriction unit 500 are less likely to deform as described above. Thereby, deformation and vibration of each of case 200, power storage module 100, and power storage device 10 can be suppressed.

Upon charging and discharging of power storage device 10, the temperature of power storage module 100 rises. Power storage cells 101A and 101C are located at respective ends of power storage module 100 in stacking direction H. Thus, the heat of power storage cells 101A and 101C is more likely to be dissipated directly to case 200.

On the other hand, power storage cell 101B is located in the central area of power storage module 100 in stacking direction H. Thus, the heat of power storage cell 101B is less likely to be dissipated directly to case 200.

Power storage cell 101B is in contact with flat plate 510 of restriction unit 500. The heat of power storage cell 101B is transferred to flat plate 510. In width direction W, both ends of flat plate 510 reach respective filling portions 400 and 401. Thus, the heat transferred to flat plate 510 is dissipated to cooling device 20 through filling portions 400 and 401 and side walls 32 and 33. Note that the heat of power storage cell 101C is also similarly dissipated to cooling device 20 through flat plate 520, filling portions 400 and 401 and side walls 32 and 33.

In this case, flat plate 510 and corrugated plate 530 are in contact with each other at an upper end portion (a top) of each curved portion 532, and the area of contact therebetween is small. Similarly, flat plate 520 and corrugated plate 530 are in contact with each other at a lower end portion (a top) of each curved portion 534, and the area of contact therebetween is small.

Thus, the heat transferred to flat plate 510 is suppressed from being transferred to flat plate 520 through corrugated plate 530, and also, the heat transferred to flat plate 520 is suppressed from being transferred to flat plate 510 through corrugated plate 530. Thereby, for example, even when the temperature of power storage cell 101B becomes high, transfer of heat from power storage cell 101B to power storage cell 101C can be suppressed.

Even if heat is transferred from flat plate 510 to corrugated plate 530 when the temperature of power storage cell 101B becomes high, the heat of corrugated plate 530 is mainly transferred to filling portions 400 and 401 since the ends of corrugated plate 530 reach respective filling portions 400 and 401. Thereby, transfer of heat to flat plate 520 is suppressed.

Further, air exists between corrugated plate 530 and each of flat plates 510, 520. Due to low thermal conductivity of air, heat transfer between flat plates 510 and 520 is suppressed.

Fig. 5 is a cross-sectional view showing a restriction unit 500A according to the first modification of restriction unit 500. Restriction unit 500A includes a flat plate 510, a flat plate 520, a corrugated plate 530, and a low rigidity material 531. Low rigidity material 531 is filled between flat plate 510 and corrugated plate 530 and also filled between flat plate 520 and corrugated plate 530. Low rigidity material 531 is an elastically deformable material such as resin. Note that low rigidity material 531 is lower in thermal conductivity than flat plates 510, 520, and corrugated plate 530. Thereby, heat transfer between flat plates 510 and 520 can be suppressed.

Fig. 6 is a cross-sectional view showing a restriction unit 500B according to the second modification of restriction unit 500. Restriction unit 500B includes a flat plate 510, a flat plate 520, a corrugated plate 530, a dilatancy material 535, and an accommodation bag 536.

Flat plates 510 and 520, corrugated plate 530, and dilatancy material 535 are accommodated in accommodation bag 536. The thermal conductivity of dilatancy material 535 is preferably greater than 0 W/mK and equal to or less than 1 W/mK, for example.

When the deformation speed of dilatancy material 535 is high, dilatancy material 535 exhibits high rigidity. When the deformation speed of dilatancy material 535 is low, dilatancy material 535 exhibits low rigidity.

Thus, when power storage module 100 deforms to expand in stacking direction H due to charging and discharging, dilatancy material 535 deforms as power storage module 100 deforms.

Accordingly, also in restriction unit 500B, application of a high load to case 200 can be suppressed even when power storage module 100 deforms due to charging and discharging.

When power storage device 10 undergoes vibrations, the vibration speed of power storage device 10 is higher than the speed at which power storage module 100 deforms during charging and discharging. Thus, the rigidity of dilatancy material 535 is high, and dilatancy material 535 is less likely to deform. Thereby, restriction unit 500B is less likely to deform, so that the vibration of power storage device 10 can be suppressed.

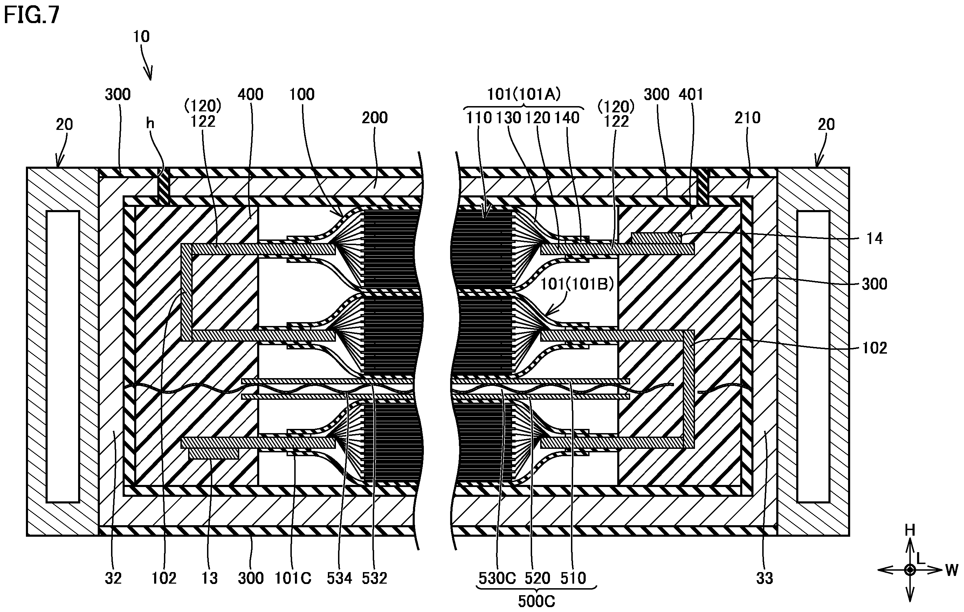

Fig. 7 is a cross-sectional view showing a restriction unit 500C according to the third modification of restriction unit 500.

Restriction unit 500C includes a flat plate 510, a flat plate 520, and a corrugated plate 530C. In width direction W, both ends of corrugated plate 530C are connected to case 200. Thereby, the heat transferred to corrugated plate 530C is readily dissipated to case 200, and thus, the heat dissipation efficiency of restriction unit 500C is improved. Note that corrugated plate 530C is provided with a through hole into which bus bar 102 is inserted.

Restriction units 500, 500B, and 500C each may be disposed between power storage cells 101. In the description of the example in the present disclosure, an electrolytic solution is accommodated in each power storage cell, but the technique of the present disclosure can also be applicable to an example in which a solid-state battery is employed as each power storage cell.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage device comprising:
a power storage module (100) including a plurality of power storage cells (101A, 101B, 101C) stacked in a stacking direction (H);
an accommodation case (200) that accommodates the power storage module (100); and
a restriction unit (500) disposed between the power storage cells (101A, 101B, 101C), wherein
the restriction unit (500) includes
a first flat plate (510) and a second flat plate (520) spaced apart from each other in the stacking direction (H), and
a corrugated plate (530) disposed between the first flat plate (510) and the second flat plate (520),
the corrugated plate (530) has a plurality of first curved portions (532) and a plurality of second curved portions (534),
each of the first curved portions (532) has a shape curved to protrude toward one side in the stacking direction (H) and extending in an intersecting direction (L) intersecting with the stacking direction (H),
each of the second curved portions (534) has a shape curved to protrude toward the other side in the stacking direction (H) and extending in the intersecting direction (L), and
the first curved portions (532) and the second curved portions (534) are alternately arranged in a direction intersecting with the stacking direction (H) and the intersecting direction (L).

2. The power storage device according to claim 1, wherein
each of the power storage cells (101A, 101B, 101C) includes an electrode assembly and a current collector plate connected to the electrode assembly,
the power storage device further comprises a filling portion (400, 401) provided inside the accommodation case (200) so as to extend from an inner wall of the accommodation case (200) to reach the current collector plate, and
the restriction unit (500) is formed to reach the filling portion (400, 401).

3. The power storage device according to claim 1 or 2, wherein
the first flat plate (510) and the corrugated plate (530) are in contact with each other at a top of each of the first curved portions (532), and
the second flat plate (520) and the corrugated plate (530) are in contact with each other at a top of each of the second curved portions (534).

4. The power storage device according to any one of claims 1 to 3, wherein the restriction unit (500) includes
an accommodation body that accommodates the first flat plate (510), the second flat plate (520), and the corrugated plate (530), and
a dilatancy material accommodated in the accommodation body.
